# EUROPEAN PATENT APPLICATION

(11) **EP 4 626 000 A1**
(43) Date of publication of application: **01.10.2025**
(21) Application number: 25164244.3
(22) Date of filing: 17.03.2025
(51) Int. Cl.: H04N 21/43, H04N 21/434, H04N 21/439, H04N 21/44, H04N 21/442, H04N 19/587

(54) **PREDICTIVE VIDEO DECODING AND RENDERING BASED ON ARTIFICIAL INTELLIGENCE**

(30) Priority: 27.03.2024 US 202418618785
(71) Applicant: INTEL Corporation, Santa Clara, CA 95054 (US)
(72) Inventor: SAKTHIVEL, Chandrasekaran, Cupertino, 95014 (US); ANAND, Jerome, 560087 Bengaluru (IN); POTLURI, Srikanth, Folsom, 95630 (US); ROSENZWEIG, Michael Daniel, Queen Creek, 85142 (US); KARUNARATNE, Passant V., Chandler, 85248 (US); KUO, Chia-Hung Sophia, Folsom, 95630-9576 (US)
(74) Representative: 2SPL Patentanwälte PartG mbB

(57) **Abstract**

Systems, apparatus, articles of manufacture, and methods to implement predictive video decoding and rendering based on artificial intelligence are disclosed. Example apparatus disclosed herein are to predict that rendering of a video frame of a media stream will be unsynchronized with rendering of corresponding audio data of the media stream. Disclosed example apparatus are also to generate a synthetic frame based on a machine learning model to replace the video frame. Disclosed example apparatus are further to cause the synthetic frame to be rendered with the corresponding audio data.

## Description

### FIELD OF THE DISCLOSURE

This disclosure relates generally to video processing and, more particularly, to predictive video decoding and rendering based on artificial intelligence.

### BACKGROUND

Hybrid and remote work arrangements have become prevalent in modern society. In support of such arrangements, the use of video conferencing, and the underlying video and audio streaming technologies, have grown considerably. However, during periods of high network and/or device usage, the streamed video and audio packets may become misaligned, resulting in a loss of synchronization between the rendered audio and the rendered video.

### BRIEF DESCRIPTION OF THE DRAWINGS

FIG. 1 is a block diagram of an example video conferencing environment including compute devices with predictive media processors that implement predictive video decoding and rendering based on artificial intelligence in accordance with teachings of this disclosure.
FIG. 2 is a block diagram of an example implementation of one of the predictive media processors of FIG. 1.
FIG, 3 is a block diagram of example video prediction circuitry included in the predictive media processor of FIG. 2.
FIG. 4 is a block diagram of example frame synthesis circuitry included in the video prediction circuitry of FIG. 3.
FIGS. 5-6 illustrate example operations performed by the predictive media processor of FIG. 2.
FIGS. 7-9 are flowcharts representative of example machine readable instructions and/or example operations that may be executed, instantiated, and/or performed by example programmable circuitry to implement the predictive media processor of FIG. 2, the video prediction circuitry of FIG. 3 and/or the frame synthesis circuitry of FIG. 4.
FIG. 10 is a block diagram of an example processing platform including programmable circuitry structured to execute, instantiate, and/or perform the example machine readable instructions and/or perform the example operations of FIGS. 7-9 to implement the predictive video processor of FIGS. 2-6.
FIG. 11 is a block diagram of an example implementation of the programmable circuitry of FIG. 10.
FIG. 12 is a block diagram of another example implementation of the programmable circuitry of FIG. 10.

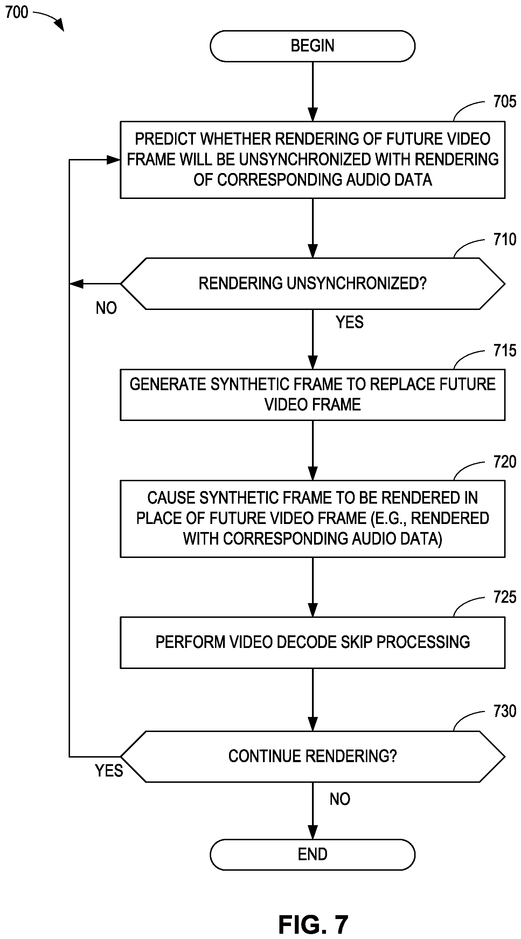

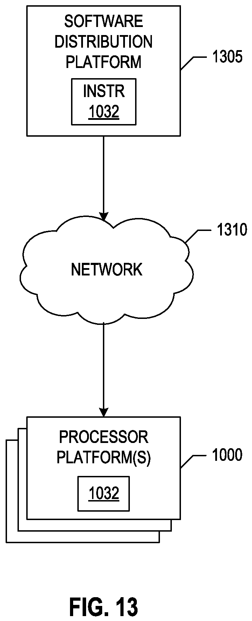

FIG. 13 is a block diagram of an example software/firmware/instructions distribution platform (e.g., one or more servers) to distribute software, instructions, and/or firmware (e.g., corresponding to the example machine readable instructions of FIGS. 7-9) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

### DETAILED DESCRIPTION

The use of video conferencing and other media streaming technologies to support hybrid and remote work arrangements, entertainment offerings, etc., has grown considerably in recent years. As a result, network usage (e.g., bandwidth, capacity, etc.) has increased to carry the underlying video and audio data streams. During peak network usage, video and audio issues can occur during conference calls, live streaming sessions, on-demand streaming scenarios, etc., resulting in a poor user-experience. Some issues that cause this poor user experience include late video frames, poor lip-sync due to asymmetric audio-video packet latencies, key-frame losses, choppy or uneven rendering at the receiver, etc.

For example, encoded (e.g., compressed) video frames of a received media stream are queued at the input to a video decoder, which decodes the compressed video frames into a queue of decoded (e.g., uncompressed) video frames for rendering. The queue of decoded (e.g., uncompressed) video frames are rendered by a renderer for presentation to a user. In some examples, the renderer renders a particular decoded video frame at a time based on a rendering timestamp of its corresponding audio data (e.g., one or more audio frames) such that the rendered video frame and corresponding rendered audio data are synchronized (e.g., time aligned). However, a video frame may be delayed relative to its corresponding audio data due to one or more factors, such as network load affecting streaming packet arrival time, system/device load affecting video decoding speed, scheduling delays, etc. If a video frame is delayed long enough, the video renderer may skip/drop the video packet without rendering, or render the video frame unsynchronized with the audio frame, resulting in a poor user experience.

Example predictive video processing techniques disclosed herein operate to improve user experience in the face of such potential issues by employing artificial intelligence (AI) to enhance video decoding and rendering in video conferencing and other media streaming scenarios. In some examples, a predictive video processor implemented in accordance with teachings of this disclosure predicts the discrepancy between rendering a video frame and rendering corresponding audio data that is to be synchronized with the video frame. In some such examples, if the predicted discrepancy is unsatisfactory (e.g., from a user experience perspective), the predictive video processor generates a synthetic frame based on a generative AI model and renders the synthetic frame in place of the delayed/missing video frame.

In some disclosed examples, the predictive video processor predicts whether rendering of a given video frame of a media stream will be unsynchronized (e.g., outside a time alignment tolerance, window, etc.) with rendering of corresponding audio data of the media stream based on one or more of an audio rendering timestamp associated with the audio data, a system clock, measured network jitter, measured network roundtrip delay, video frame type, etc. In some examples, if the predictive video processor predicts that the rendering of the given video frame will be unsynchronized with the rendering of the corresponding audio data, the predictive video processor replaces the given video frame with a synthetic frame and renders the synthetic frame, instead of the given video frame, with the corresponding audio data. Furthermore, in some such examples, the predictive video processor instructs or otherwise causes decoding of the given video frame to also be skipped, thereby conserving processing resources rather than unnecessarily decoding the given video frame.

In some disclosed examples, the predictive video processor generates the synthetic frame based on a two-stage generative AI model. In some such examples, the two-stage generative AI model includes a baseline synthesis model trained to generate baseline synthetic frames based on prior decoded video frames of the media stream, and a synthesis refinement model trained to refine a portion of a baseline synthetic frame based on an audio transcript. In some examples, the audio transcript corresponds to audio frames associated with times before, and possibly coinciding with or after, the given video frame to be replaced by the generated synthetic frame In some such examples, the predictive video processor invokes the baseline synthesis model to repeatedly (e.g., periodically, based on one or more events, etc.) generate high-quality, baseline synthetic frames using sampled decoded video frames of the media stream. Then, when predictive video processor determines that a given video frame is to be replaced with a synthetic frame, the predictive video processor selects the most recent baseline synthetic frame and invokes the synthesis refinement model to refine a portion of the selected baseline synthetic frame to generate a refined synthetic frame to replace the given video frame. For example, the synthesis refinement model may use the audio transcript to refine a portion of the selected baseline synthetic frame corresponding to the lips and mouth area of the speaker to reflect the viseme associated with the uttered speech within the frame time.

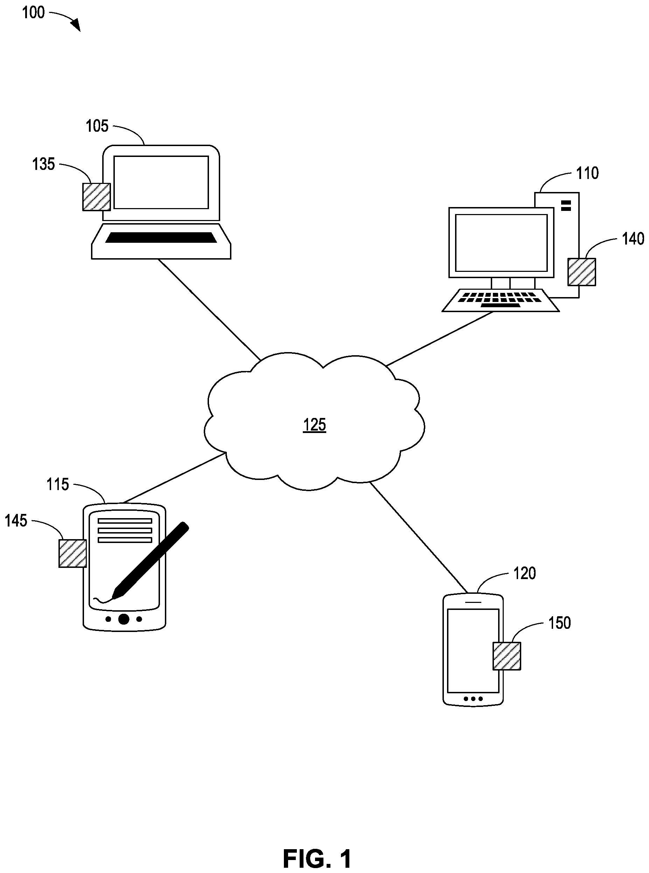

FIG. 1 is a block diagram of an example video conferencing environment 100 in which example compute devices 105-120 implement predictive video decoding and rendering based on artificial intelligence in accordance with teachings of this disclosure. In the illustrated example, the compute devices 105-120 correspond to any type(s) and/or number(s) of compute devices capable of communicating audio and video data via an example network 125. For example, the compute device 105 corresponds to an example notebook or laptop computer 105, the compute device 110 corresponds to an example desktop computer 110, the example compute device 115 corresponds to an example personal data assistance (PDA) 115, and the example compute device 120 corresponds to an example smartphone 120.

The network 125 of the illustrated example corresponds to any type(s) and/or number(s) of networks capable of communicating audio and video data among the compute devices 105-120. For example, the network 125 can be implemented by one or more wireless networks, such as one or more mobile cellular networks, one or more satellite networks, one or more Wi-Fi networks, etc. Additionally or alternatively, the network 125 can be implemented by one or more wired networks, such as one or more Ethernet networks, one or more digital subscriber lines, etc.

In the illustrated example, the compute devices 105-120 execute or otherwise implement respective video conferencing applications that utilize video streaming and audio streaming to communicate video and audio data amongst the compute devices 105-120 to create a video conference experience. The compute devices 105-120 also include respective predictive video processor circuits 135-150 that implement predictive video decoding and rendering based on artificial intelligence in accordance with teachings of this disclosure. For example, the compute device 105 includes an example predictive video processor circuit 135, the compute device 110 includes an example predictive video processor circuit 140, the compute device 115 includes an example predictive video processor circuit 145, and the compute device 120 includes an example predictive video processor circuit 150.

In the illustrated example, the predictive video processor circuits 135-150 operate to predict whether rendering of given video frames at their respective compute devices 105-120 will be unsynchronized (e.g., outside a time alignment tolerance, window, etc.) with rendering of corresponding audio data at their respective compute devices 105-120, and if so, replace the affected video frames with respective synthetic frames for rendering with the corresponding audio data. For example, if the predictive video processor 135 predicts that the rendering of a given video frame will be unsynchronized with the rendering of the corresponding audio data at the compute device 105, the predictive video processor 135 replaces the given video frame with a synthetic frame and renders the synthetic frame, instead of the given video frame, with the corresponding audio data. Furthermore, in some examples, the predictive video processor 135 instructs or otherwise causes decoding of the given video frame to also be skipped, thereby conserving processing resources of the compute device 105 rather than unnecessarily decoding the given video frame.

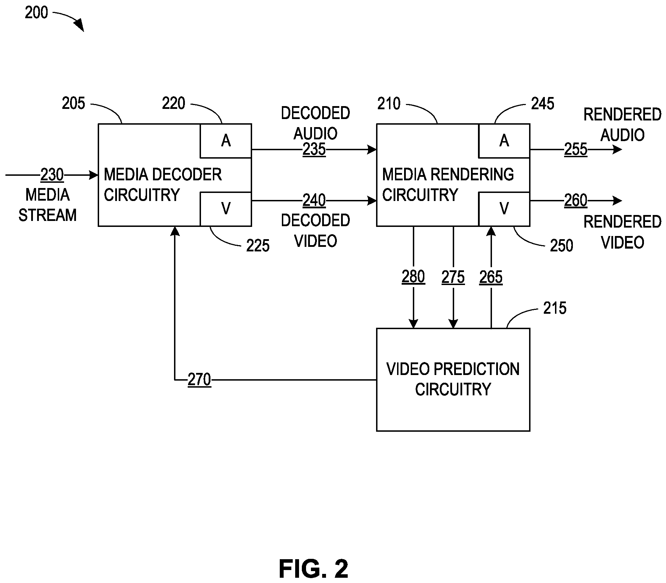

FIG. 2 is a block diagram of an example predictive video processor 200 that can be used to implement any or all of the predictive video processors 135-150 of FIG. 1 to implement predictive video decoding and rendering based on artificial intelligence. The predictive video processor 200 of FIG. 2 may be instantiated (e.g., creating an instance of, bring into being for any length of time, materialize, implement, etc.) by programmable circuitry such as a Central Processor Unit (CPU) executing first instructions. Additionally or alternatively, the predictive video processor 200 of FIG. 2 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 2 may, thus, be instantiated at the same or different times. Some or all of the circuitry of FIG. 2 may be instantiated, for example, in one or more threads executing concurrently on hardware and/or in series on hardware. Moreover, in some examples, some or all of the circuitry of FIG. 2 may be implemented by microprocessor circuitry executing instructions and/or FPGA circuitry performing operations to implement one or more virtual machines and/or containers.

The example predictive video processor 200 of FIG. 2 includes example media decoder circuitry 205, example media rendering circuitry 210 and example video prediction circuitry 215. The media decoder circuitry 205 includes example audio decoder circuitry 220 and example video decoder circuitry 225. In the illustrated example, the media decoder circuitry 205 receives, obtains or otherwise accesses an example input media stream 230 that includes encoded audio frame and encoded video frames. For example, the encoded audio frame and encoded video frames can correspond to a video conferencing application. The audio decoder circuitry 220 of the illustrated example implements any type(s) and/or number(s) of audio decoding techniques to uncompress and/or otherwise convert the encoded audio frames of the input media stream 230 to example decoded (e.g., uncompressed) audio frames 235 to output to the media rendering circuitry 210. Similarly, the video decoder circuitry 225 of the illustrated example implements any type(s) and/or number(s) of video decoding techniques to uncompress and/or otherwise convert the encoded video frames of the input media stream 230 to example decoded (e.g., uncompressed) video frames 240 to output to the media rendering circuitry 210.

The media rendering circuitry 210 includes example audio rendering circuitry 245 and example video rendering circuitry 250. In the illustrated example, the media rendering circuitry 210 receives, obtains or otherwise accesses the decoded audio frames 235 and the decoded video frames 240 from the media decoder circuitry 205. The audio rendering circuitry 245 of the illustrated example implements any type(s) and/or number(s) of audio rendering techniques to convert the decoded audio frames 235 to example rendered audio 255. For example, the audio rendering circuitry 245 may perform one or more audio rendering operations such as audio equalization, signal processing, digital-to-analog conversion, amplification, etc. In the illustrated example, the audio rendering circuitry 245 utilizes audio rendering timestamps (e.g., such as audio presentation timestamps or audio PTSs) associated with the decoded audio frames 235 (e.g., decoded from the media stream 230 by the audio decoder circuitry 220) to determine when to render respective ones of the decoded audio frames 235.

Similarly, the video rendering circuitry 250 of the illustrated example implements any type(s) and/or number(s) of video rendering techniques to convert the decoded video frames 240 to example rendered video 260. For example, the video rendering circuitry 250 may perform one or more video rendering operations such as color space conversion, white balancing, color correction, signal processing, digital-to-analog conversion, amplification, etc. In the illustrated example, the video rendering circuitry 250 utilizes video rendering timestamps (e.g., such as video presentation timestamps or video PTSs) associated with the decoded video frames 240 (e.g., decoded from the media stream 230 by the video decoder circuitry 225) to synchronize the rendering of the decoded video frames 240 with the corresponding decoded audio frames 235. In some examples, the audio rendering timestamps drive the rendering schedule of the media rendering circuitry 210 as the audio frames 235 are more likely to be received, decoded and available in time than the video frames 240. In some such examples, the media rendering circuitry 210 skips rendering of those video frames 240 that arrive too late or are unavailable when their corresponding audio frames 235 are to be rendered.

In the illustrated example, the video prediction circuitry 215 predicts whether rendering of a given video frame 240 of the media stream 230 will be unsynchronized (e.g., not synchronized, outside a time alignment tolerance, outside a time alignment window, outside a time alignment offset, etc.) with rendering of a corresponding audio frame 235 of the media stream 230. If the video prediction circuitry 215 predicts that the rendering of the given video frame 240 will not be synchronized with the rendering of the corresponding audio frame 235, the video prediction circuitry 215 generates an example synthetic frame 265 (e.g., in substantially real time) to replace the given video frame. The video prediction circuitry 215 provides the synthetic frame 265 to the media rendering circuitry 210, as shown, to cause the video rendering circuitry 250 to render the synthetic frame 265, instead of the given video frame 240, with the corresponding audio frame 235. Furthermore, in the illustrated example, the video prediction circuitry 215 outputs or otherwise provides an example skip control signal 270 (e.g., or skip control message 270, skip control instruction 270, etc.) to the media decoder circuitry 205 to instruct or otherwise cause the video decoder circuitry 225 to skip decoding of the given video frame 240 (e.g., to drop the given video frame 240 if it has not already been decoded), thereby conserving processing resources of the media decoder circuitry 205 rather than unnecessarily decoding the given video frame.

The video prediction circuitry 215 of the illustrated example receives, accepts or otherwise obtains one or more example video rendering metrics 275 from the media rendering circuitry 210. For example, the video rendering metric(s) 275 can include audio rendering timestamps associated with the decoded audio data 235, video rendering timestamps associated with the decoded video data 240, frame counts for the decoded video frames 240, video frame types for the decoded video frames 240, system clock values, measured network jitter, measured network roundtrip delay, occupancy data for an audio frame buffer at the input to the audio rendering circuitry 245, occupancy data for a video frame buffer at the input to the video rendering circuitry 250, a delay between the audio frame buffer and the video frame buffer, etc. The video prediction circuitry 215 uses the video rendering metric(s) 275 to predict whether rendering of a given video frame 240 of the media stream 230 will be unsynchronized with rendering of a corresponding audio frame 235 of the media stream 230, as described in further detail below.

The video prediction circuitry 215 of the illustrated example also receives, accepts or otherwise obtains example decoded media data 280 from the media rendering circuitry 210. For example, the decoded media data 280 can include one or more of the decoded video frames 240, one or more of the decoded audio frames 235, audio transcript data decoded or otherwise determined from the media stream 230, etc. As described in further detail below, the video prediction circuitry 215 uses the decoded media data 280 to generate a synthetic frame to replace a given video frame 240 for which rendering is to be skipped.

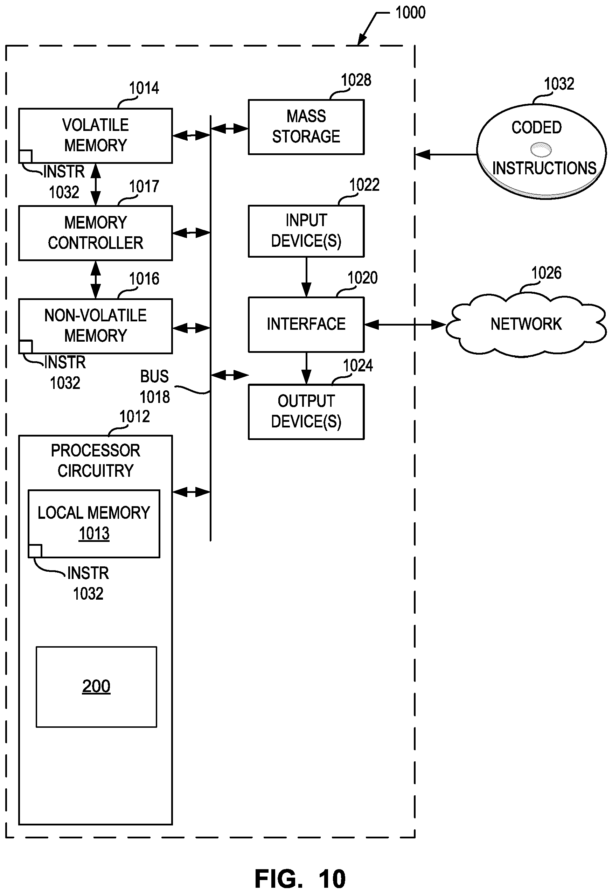

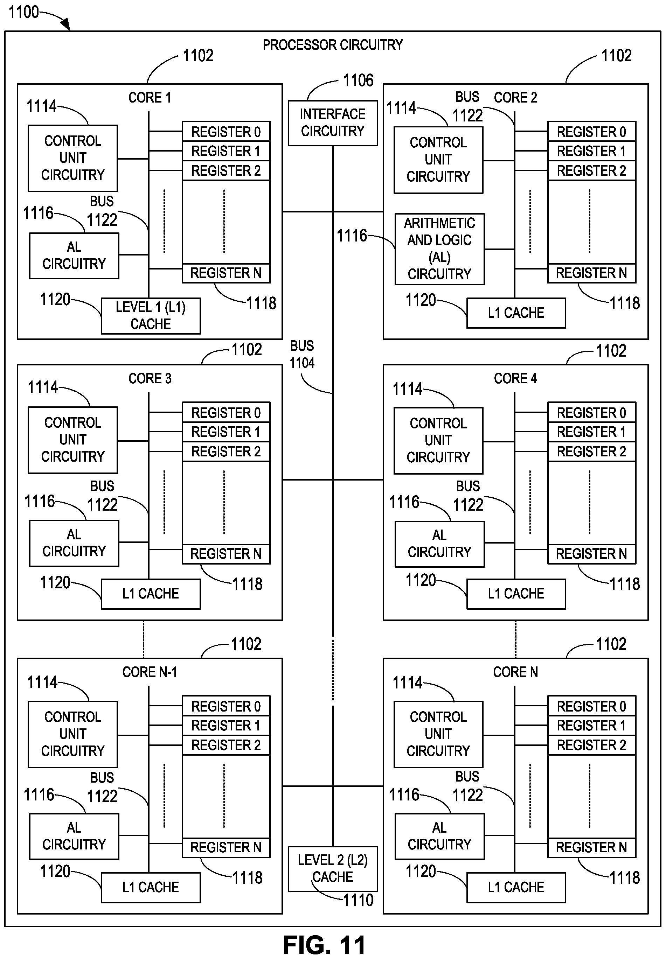

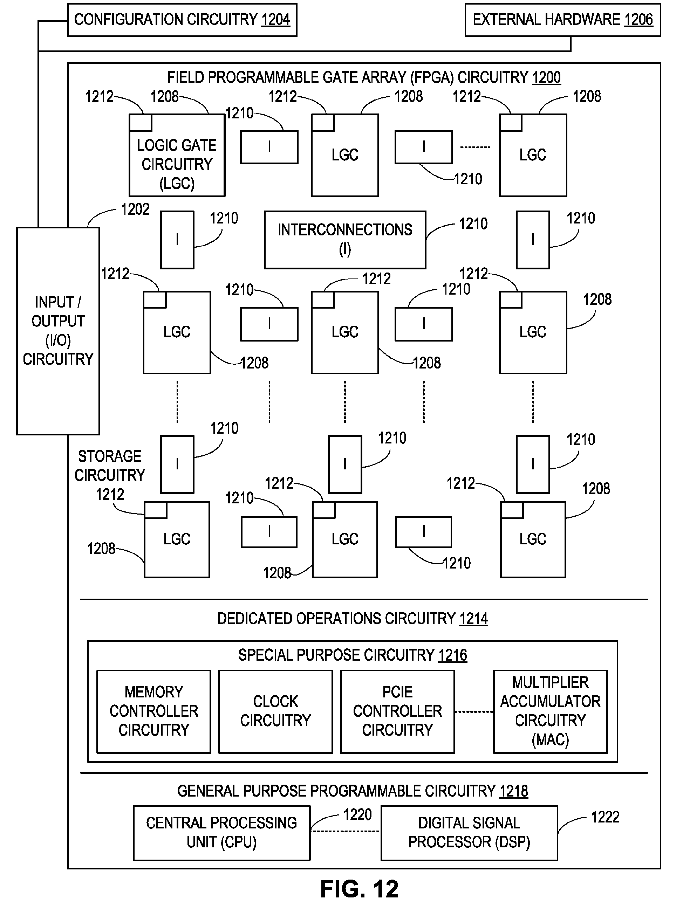

In some examples, the predictive video processor 200 includes means for video prediction. For example, the means for video prediction may be implemented by the video prediction circuitry 215. In some examples, the video prediction circuitry 215 may be instantiated by programmable circuitry such as the example programmable circuitry 1012 of FIG. 10. For instance, the video prediction circuitry 215 may be instantiated by the example microprocessor 1100 of FIG. 11 executing machine executable instructions such as those implemented by FIGS. 7-9. In some examples, the video prediction circuitry 215 may be instantiated by hardware logic circuitry, which may be implemented by an ASIC, XPU, or the FPGA circuitry 1200 of FIG. 12 configured and/or structured to perform operations corresponding to the machine readable instructions. Additionally or alternatively, the video prediction circuitry 215 may be instantiated by any other combination of hardware, software, and/or firmware. For example, the video prediction circuitry 215 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

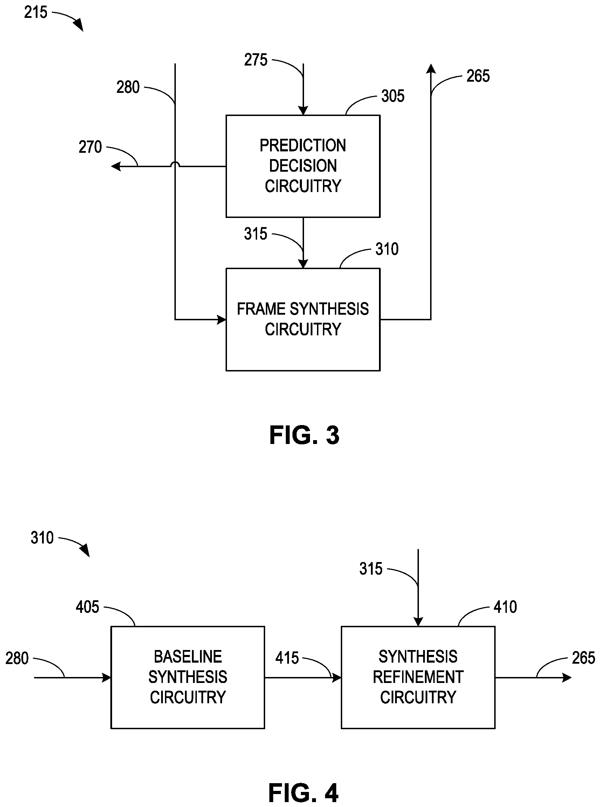

FIG. 3 is a block diagram of an example implementation of the video prediction circuitry 215 of FIG. 2. The video prediction circuitry 215 of FIG. 3 may be instantiated (e.g., creating an instance of, bring into being for any length of time, materialize, implement, etc.) by programmable circuitry such as a Central Processor Unit (CPU) executing first instructions. Additionally or alternatively, the video prediction circuitry 215 of FIG. 3 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 3 may, thus, be instantiated at the same or different times. Some or all of the circuitry of FIG. 3 may be instantiated, for example, in one or more threads executing concurrently on hardware and/or in series on hardware. Moreover, in some examples, some or all of the circuitry of FIG. 3 may be implemented by microprocessor circuitry executing instructions and/or FPGA circuitry performing operations to implement one or more virtual machines and/or containers.

The example video prediction circuitry 215 of FIG. 3 includes example prediction decision circuitry 305 and example frame synthesis circuitry 310. The prediction decision circuitry 305 predicts whether rendering of a given video frame of a media stream 230 will be unsynchronized with rendering of a corresponding audio frame of the media stream 230 based on the video rendering metric(s) 275 from the media rendering circuitry 210. As described above, the video rendering metric(s) 275 can include audio rendering timestamps associated with decoded audio data, frame counts for the decoded video frames, video frame types for the decoded video frames, system clock values, measured network jitter, measured network roundtrip delay, occupancy data for an audio frame buffer of the media rendering circuitry 210 that stores decoded audio frames to be rendered, occupancy data for a video frame buffer of the media rendering circuitry 210 that stores decoded video frames to be rendered, a delay between the audio frame buffer and the video frame buffer, etc. The prediction decision circuitry 305 outputs an example synthetic frame generation signal 315 to indicate whether a synthetic frame is to be generated to replace the given video frame of the media stream 230. For example, the prediction decision circuitry 305 asserts or otherwise sets the synthetic frame generation signal 315 to indicate the synthetic frame is to be generated if the prediction decision circuitry 305 predicts that rendering of the given video frame will be unsynchronized. However, if the prediction decision circuitry 305 predicts that rendering of the given video frame will be synchronized, the prediction decision circuitry 305 de-asserts or otherwise sets the synthetic frame generation signal 315 to indicate that synthetic frame generation does not need to be performed for the given video frame of the media stream 230.

In some examples, the prediction decision circuitry 305 predicts whether rendering of a given video frame will be unsynchronized with rendering of a corresponding audio data based on comparison of an expected rendering time of the given decoded video frame to an audio rendering timestamp associated with the corresponding audio data. For example, the prediction decision circuitry 305 may determine an expected rendering time of the given decoded video frame based on a current system clock value, a position of the given decoded video frame in the video frame buffer of the media rendering circuitry 210, and an estimated processing time of the video rendering circuitry 250 to render video frames. The prediction decision circuitry 305 may then determine a difference between the expected rendering time of the given decoded video frame and the audio rendering timestamp (e.g., adjusted based on the current system clock value), and compare the difference to a threshold to predict whether rendering of the given video frame will be unsynchronized. For example, the threshold may correspondence to a permissible synchronization tolerance or window, and the prediction decision circuitry 305 predicts that rendering of the given video frame will be unsynchronized if the difference between the expected rendering time of the given decoded video frame and the audio rendering timestamp does not satisfy (e.g., exceeds) the threshold.

In some examples, the prediction decision circuitry 305 additionally or alternatively predicts whether rendering of a given video frame will be unsynchronized with rendering of a corresponding audio frame based on whether the video frame is unavailable or is expected to be unavailable when the corresponding audio frame is to be rendered. For example, the prediction decision circuitry 305 may examine the occupancy data of the video frame buffer of the media rendering circuitry 210 to determine whether the given video frame is missing from the video frame buffer (e.g., was dropped during reception, has been delayed, etc.). For example, the prediction decision circuitry 305 may use the audio rendering timestamp of the corresponding audio data to search for a video frame in the video frame buffer that has a corresponding video rendering timestamp to determine whether the video frame is missing.

In some examples, the prediction decision circuitry 305 additionally or alternatively predicts whether rendering of a given video frame will be unsynchronized with rendering of a corresponding audio frame based on comparison of the occupancy data of the occupancy data for the audio frame buffer of the media rendering circuitry 210 with the occupancy data for the video frame buffer of the media rendering circuitry 210. For example, the prediction decision circuitry 305 may determine an alignment or offset between a position of the given video frame in the video frame buffer and a position of the corresponding audio frame in the audio frame. If the alignment/offset does not satisfy (e.g., exceeds) a threshold number of frames, then the prediction decision circuitry 305 may predict that rendering of the given video frame will be unsynchronized due to delay in video rendering preceding the given video frame.

In some examples, the prediction decision circuitry 305 additionally or alternatively predicts whether rendering of a given video frame will be unsynchronized with rendering of a corresponding audio frame based on one or more machine learning models that process any or all of the video rendering metric(s) 275. For example, the prediction decision circuitry 305 may include one or more machine learning models (e.g., one or more neural networks, one or more AI algorithms, etc.) trained to estimate an expected time at which a given video frame will be rendered based on one or more of the video rendering metric(s) 275. For example, the one or more machine learning models may be trained to estimate the expected time at which a given video frame will be rendered based on one or more an audio rendering timestamp associated with the corresponding decoded audio data, a reference frame count for the given video frame, video frame type for the given video frame, a current system clock value, measured network jitter, measured network roundtrip delay, current occupancy data for the audio frame buffer of the media rendering circuitry, current occupancy data for the video frame buffer of the media rendering circuitry 210, a delay between the audio frame buffer and the video frame buffer (e.g., the offset between the location of the given video frame in the video frame buffer and the location of the corresponding audio frame in the audio buffer), etc. In some such examples, the prediction decision circuitry 305 predicts that rendering of the given video frame will be unsynchronized if the expected rendering time output from the machine learning model(s) does not satisfy (e.g., exceeds) a threshold time window or limit associated with an acceptable user experience.

In the illustrated example, the prediction decision circuitry 305 also outputs the skip control signal 270 to the media decoder circuitry 205 to instruct or otherwise cause the video decoder circuitry 225 to skip decoding of a given video frame if the prediction decision circuitry 305 predicts that rendering of the given video frame will be unsynchronized (e.g., delayed, offset, etc.) and a synthetic frame will be generated to replace the given video frame. For example, the prediction decision circuitry 305 may examine the decoded media data 280 to determine whether the given video frame has already been decoded by the video decoder circuitry 225 (e.g., by determining whether the given video frame is already stored in the video frame buffer of the video rendering circuitry 250). In some examples, if the given video frame has not been decoded yet, the prediction decision circuitry 305 asserts or otherwise sets the skip control signal 270 to cause (e.g., instruct) the media decoder circuitry 205 to skip decoding of the given video frame.

In some examples, the prediction decision circuitry 305 also bases its decision to skip decoding of a given video frame on the type of the video frame. For example, the prediction decision circuitry 305 may examine the decoded media data 280 to determine whether the given video frame to be replaced with a synthetic frame is a reference frame (e.g., such as an MPEG "I" frame) or a predicted frame (e.g., such as an MPEG "P" or "B" frame). For example, the prediction decision circuitry 305 may determine whether the given video frame is a reference frame or a predicted frame based on a frame count of the given video frame in a group of pictures (GOP). In some such examples, if the given video frame to be replaced with a synthetic frame is a predicted frame, the prediction decision circuitry 305 asserts or otherwise sets the skip control signal 270 to cause (e.g., instruct) the media decoder circuitry 205 to skip decoding of the given video frame. However, if the given video frame to be replaced with a synthetic frame is a reference frame, the prediction decision circuitry 305 de-asserts or otherwise sets the skip control signal 270 to cause (e.g., instruct) the media decoder circuitry 205 to decode the given video frame as it is a reference frame to be used to decode subsequent video frames of the media stream 230.

The frame synthesis circuitry 310 of the illustrated example generates the synthetic frame 265 to replace a given video frame for which rendering is to be skipped. In the illustrated example, the frame synthesis circuitry 310 generates the synthetic frame 265 in response to assertion of the skip control signal 270 by the prediction decision circuitry 305. As also described above, the frame synthesis circuitry 310 generates the synthetic frame 265 based on the decoded media data 280 from the media rendering circuitry 210. For example, the decoded media data 280 can include one or more decoded video frames from the media stream 230, one or more decoded audio frames from the media stream 230, audio transcript data decoded or otherwise determined from the media stream 230, etc. An example implementation of the frame synthesis circuitry 310 is illustrated in FIG. 4, which is described in detail below.

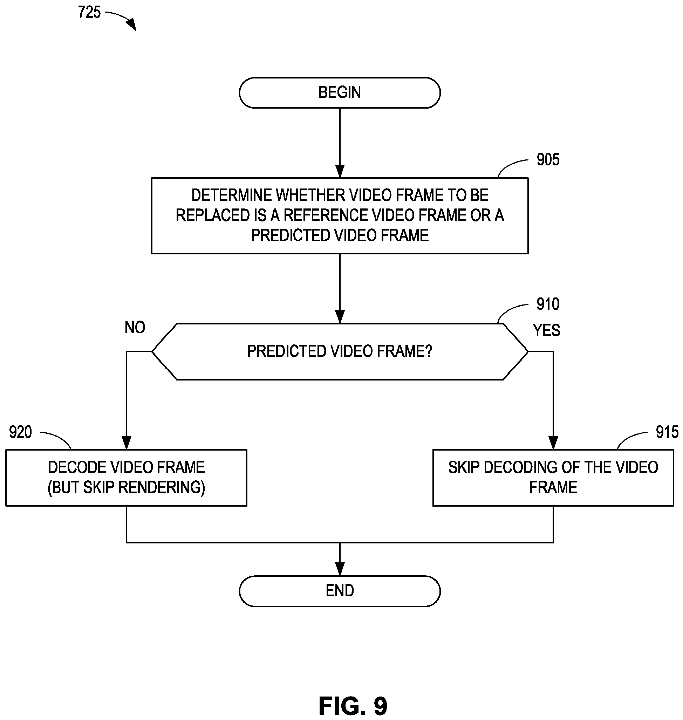

In some examples, the video prediction circuitry 215 includes means for predicting whether rendering will be unsynchronized. For example, the means for predicting whether rendering will be unsynchronized may be implemented by the prediction decision circuitry 305. In some examples, the prediction decision circuitry 305 may be instantiated by programmable circuitry such as the example programmable circuitry 1012 of FIG. 10. For instance, the prediction decision circuitry 305 may be instantiated by the example microprocessor 1100 of FIG. 11 executing machine executable instructions such as those implemented by at least blocks 705 and 725 of FIG. 7, and/or blocks 905-920 of FIG. 9. In some examples, the prediction decision circuitry 305 may be instantiated by hardware logic circuitry, which may be implemented by an ASIC, XPU, or the FPGA circuitry 1200 of FIG. 12 configured and/or structured to perform operations corresponding to the machine readable instructions. Additionally or alternatively, the prediction decision circuitry 305 may be instantiated by any other combination of hardware, software, and/or firmware. For example, the prediction decision circuitry 305 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

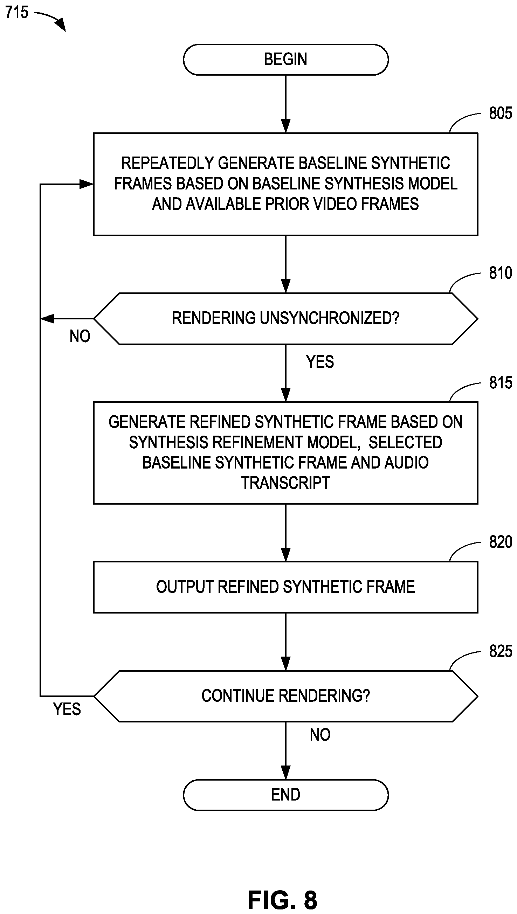

In some examples, the video prediction circuitry 215 includes means for generating synthetic frames. For example, the means for generating synthetic frames may be implemented by the frame synthesis circuitry 310. In some examples, the frame synthesis circuitry 310 may be instantiated by programmable circuitry such as the example programmable circuitry 1012 of FIG. 10. For instance, the frame synthesis circuitry 310may be instantiated by the example microprocessor 1100 of FIG. 11 executing machine executable instructions such as those implemented by at least blocks 715 and 720 of FIG. 7, and/or blocks 805-825 of FIG. 8. In some examples, the frame synthesis circuitry 310 may be instantiated by hardware logic circuitry, which may be implemented by an ASIC, XPU, or the FPGA circuitry 1200 of FIG. 12 configured and/or structured to perform operations corresponding to the machine readable instructions. Additionally or alternatively, the frame synthesis circuitry 310 may be instantiated by any other combination of hardware, software, and/or firmware. For example, the frame synthesis circuitry 310 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

FIG. 4 is a block diagram of an example implementation of the frame synthesis circuitry 310 of FIG. 3. The frame synthesis circuitry 310 of FIG. 4 may be instantiated (e.g., creating an instance of, bring into being for any length of time, materialize, implement, etc.) by programmable circuitry such as a Central Processor Unit (CPU) executing first instructions. Additionally or alternatively, the frame synthesis circuitry 310 of FIG. 4 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 4 may, thus, be instantiated at the same or different times. Some or all of the circuitry of FIG. 4 may be instantiated, for example, in one or more threads executing concurrently on hardware and/or in series on hardware. Moreover, in some examples, some or all of the circuitry of FIG. 4 may be implemented by microprocessor circuitry executing instructions and/or FPGA circuitry performing operations to implement one or more virtual machines and/or containers.

The example frame synthesis circuitry 310 of FIG. 4 implements an example two-stage generative AI model to generate a synthetic frame to replace a given video frame for rendering. As such, the frame synthesis circuitry 310 of FIG. 4 includes example baseline synthesis circuitry 405 and example synthesis refinement circuitry 410. The baseline synthesis circuitry 405 implements a first stage of the two-stage generative AI model and the synthesis refinement circuitry 410 implements a second stage of the two-stage generative AI model.

In the illustrated example, the baseline synthesis circuitry 405 includes a first generative AI model trained to generate a baseline synthetic frame from one or more prior video frames of the media stream 230. The baseline synthesis circuitry 405 of the illustrated example repeatedly (e.g., periodically, based on one or more events, etc.) samples the decoded video frames included in the decoded media data 280 (which correspond to the media stream 230) and processes the decoded video frames with the first generative AI model to repeatedly output baseline synthetic frames corresponding to the media stream 230. For example, the resulting baseline synthetic frames may form a sequence of high-quality synthetic frames that represent baseline sample points at respective sample instances of the media stream 230.

The synthesis refinement circuitry 410 of the illustrated example includes a second generative AI model trained to generate a refined synthetic frame from a selected baseline synthetic frame and an audio transcript associated with the given video frame to be replaced by the refined synthetic frame. For example, after (e.g., in response to) the synthetic frame generation signal 315 being asserted by the prediction decision circuitry 305 (e.g., which indicates that rendering of the given video frame will be unsynchronized, delayed, unavailable, etc.), the synthesis refinement circuitry 410 selects a baseline synthetic frame generated by the baseline synthesis circuitry 405. For example, the synthesis refinement circuitry 410 may select the most recently generated baseline synthetic frame, which was generated based on one or more video frames preceding (e.g., prior to) the given video frame to be replaced. The synthesis refinement circuitry 410 also obtains an audio transcript associated with the video frame to be replaced and/or one or more frames before and/or after the video frame to be replaced. For example, the audio transcript may be decoded from the media stream 230 and included in the media data 280. Additionally or alternatively, the audio transcript may be obtained by performing speech-to-text processing on audio data included in the media data 280.

The synthesis refinement circuitry 410 then processes the selected baseline synthetic frame and the audio transcript with the second generative AI model to generate the refined synthetic frame. The second generative AI model modifies the selected baseline synthetic frame to account for movement of a talker and/or camera motion indicated by the audio transcript. For example, the second generative AI model may detect a portion of the selected baseline synthetic frame that corresponds to the lips and/or mouth area of a talker in the frame. The second generative AI model may then modify the lips and/or mouth area to correspond to the viseme associated with the uttered speech identified in the audio transcript. In the illustrated example, the synthesis refinement circuitry 410 outputs the refined synthetic frame as the synthetic frame 265 to be rendered in place of the corresponding video frame.

In some examples, the frame synthesis circuitry 310 includes means for generating baseline synthetic frames. For example, the means for generating baseline synthetic frames may be implemented by the baseline synthesis circuitry 405. In some examples, the baseline synthesis circuitry 405 may be instantiated by programmable circuitry such as the example programmable circuitry 1012 of FIG. 10. For instance, the baseline synthesis circuitry 405 may be instantiated by the example microprocessor 1100 of FIG. 11 executing machine executable instructions such as those implemented by at least block 805 of FIG. 8. In some examples, the baseline synthesis circuitry 405 may be instantiated by hardware logic circuitry, which may be implemented by an ASIC, XPU, or the FPGA circuitry 1200 of FIG. 12 configured and/or structured to perform operations corresponding to the machine readable instructions. Additionally or alternatively, the baseline synthesis circuitry 405 may be instantiated by any other combination of hardware, software, and/or firmware. For example, the baseline synthesis circuitry 405 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the frame synthesis circuitry 310 includes means for generating refined synthetic frames. For example, the means for generating refined synthetic frames may be implemented by the synthesis refinement circuitry 410. In some examples, the synthesis refinement circuitry 410 may be instantiated by programmable circuitry such as the example programmable circuitry 1012 of FIG. 10. For instance, the synthesis refinement circuitry 410 may be instantiated by the example microprocessor 1100 of FIG. 11 executing machine executable instructions such as those implemented by at least blocks 815-820 of FIG. 8. In some examples, the synthesis refinement circuitry 410 may be instantiated by hardware logic circuitry, which may be implemented by an ASIC, XPU, or the FPGA circuitry 1200 of FIG. 12 configured and/or structured to perform operations corresponding to the machine readable instructions. Additionally or alternatively, the synthesis refinement circuitry 410 may be instantiated by any other combination of hardware, software, and/or firmware. For example, the synthesis refinement circuitry 410 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

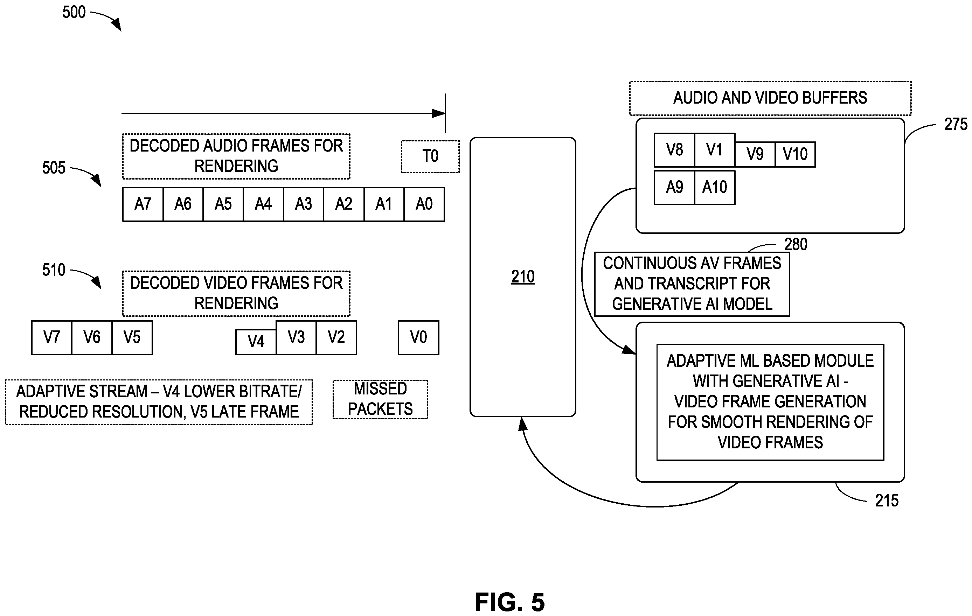

FIG. 5 illustrates a first example operation 500 performed by the example predictive video processor 200 of FIG. 2. In the example operation 500 of FIG. 5, the video prediction circuitry 215 monitors an example audio frame buffer 505 and an example video frame buffer 510 of the media rendering circuitry 210, as well as other metrics included in the video rendering metrics 275, to determine whether rendering of one or more video frames will be unsynchronized (e.g., delayed, offset, etc.) with rendering of their corresponding audio frames. In the illustrated example, the video prediction circuitry 215 determines that video frame V1 is unavailable and video frame V5 is delayed. As such, the video prediction circuitry 215 determines that video frames V1 and V5 are to be replaced with respective synthetic frames to provide the missing video frame V1 and to mitigate the delay of video frame V5 such that subsequent video frames V6 and V7 can be rendered synchronously with their corresponding audio data. In the example operation 500, the video prediction circuitry 215 generates the synthetic frames to replace the video frames V1 and V5 based on video frames and audio transcript data provided in the decoded media data 280.

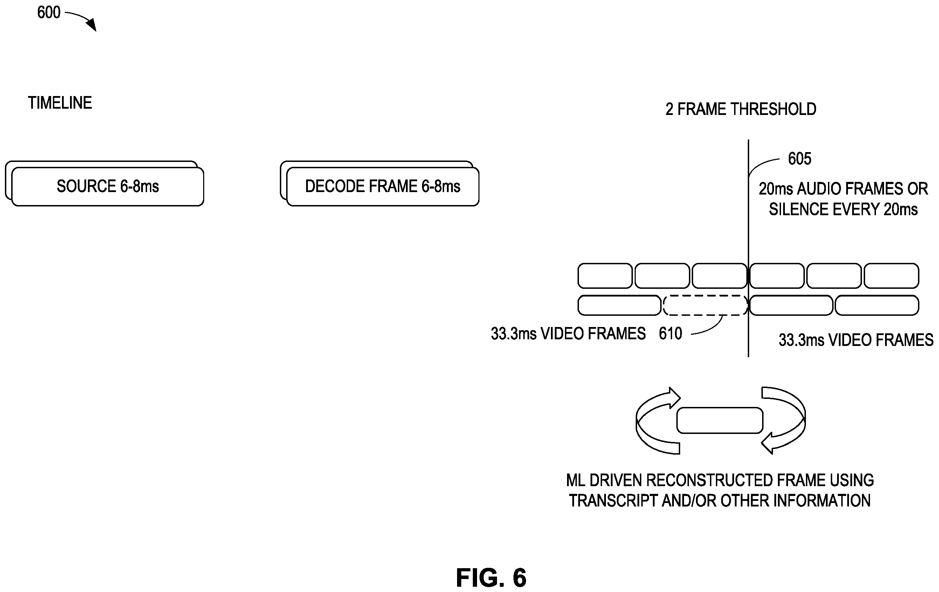

FIG. 6 illustrates a second example operation 600 performed by the example predictive video processor 200 of FIG. 2. In the example operation 600 of FIG. 6, the video prediction circuitry 215 utilizes a lookahead threshold 605 of at least two (2) video frames to predict whether an example video frame 610 will be delayed or missed for rendering relative to its corresponding audio data. In the illustrated example, the lookahead threshold 605 provides sufficient processing time for generation of an example synthetic frame 615 to replace the video frame 610.

While an example manner of implementing the predictive video processor 200 is illustrated in FIGS. 2-6, one or more of the elements, processes, and/or devices illustrated in FIGS. 2-6 may be combined, divided, re-arranged, omitted, eliminated, and/or implemented in any other way. Further, the example media decoder circuitry 205, the example media rendering circuitry 210, the example video prediction circuitry 215, the example audio decoder circuitry 220, the example video decoder circuitry 225, the example audio rendering circuitry 245, the example video rendering circuitry 250, the example prediction decision circuitry 305, the example frame synthesis circuitry 310, the example baseline synthesis circuitry 405, the example synthesis refinement circuitry 410 and/or, more generally, the example predictive video processor 200 of FIGS. 2-6, may be implemented by hardware alone or by hardware in combination with software and/or firmware. Thus, for example, any of the example media decoder circuitry 205, the example media rendering circuitry 210, the example video prediction circuitry 215, the example audio decoder circuitry 220, the example video decoder circuitry 225, the example audio rendering circuitry 245, the example video rendering circuitry 250, the example prediction decision circuitry 305, the example frame synthesis circuitry 310, the example baseline synthesis circuitry 405, the example synthesis refinement circuitry 410 and/or, more generally, the example predictive video processor 200 could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example predictive video processor 200 may include one or more elements, processes, and/or devices in addition to, or instead of, those illustrated in FIGS. 2-6, and/or may include more than one of any or all of the illustrated elements, processes and devices.

Flowchart(s) representative of example machine readable instructions, which may be executed by programmable circuitry to implement and/or instantiate the predictive video processor 200 of FIGS. 2-6 and/or representative of example operations which may be performed by programmable circuitry to implement and/or instantiate the predictive video processor 200 of FIGS. 2-6, are shown in FIGS. 7-9. The machine readable instructions may be one or more executable programs or portion(s) of one or more executable programs for execution by programmable circuitry such as the programmable circuitry 1012 shown in the example processor platform 1000 discussed below in connection with FIG. 10 and/or may be one or more function(s) or portion(s) of functions to be performed by the example programmable circuitry (e.g., an FPGA) discussed below in connection with FIGS. 11 and/or 12. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 7-9, many other methods of implementing the example predictive video processor 200 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 7-9 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

FIG. 7 is a flowchart representative of example machine readable instructions and/or example operations 700 that may be executed, instantiated, and/or performed by programmable circuitry to implement the predictive video processor 200 and, more specifically, the video prediction circuitry 215 included in the predictive video processor 200. The example machine-readable instructions and/or the example operations 700 of FIG. 7 begin at block 705, at which the prediction decision circuitry 305 of the video prediction circuitry 215 predicts whether rendering of a future video frame will be unsynchronized with rendering of corresponding audio data, as described above. If rendering of the future video frame will be unsynchronized (block 710), then at block 715 the frame synthesis circuitry 310 generates a synthetic frame to replace the future video frame, as described above. At block 720, the frame synthesis circuitry 310 provides the synthetic frame to the media rendering circuitry 210 to cause the synthetic frame to be rendered in place of the future video frame (e.g., to be rendered with the corresponding audio data), as described above. At block 725, the prediction decision circuitry 305 perform video decode skip processing, as described above. If rendering is to continue (block 730), processing returns to block 705 and blocks subsequent thereto. Otherwise, the example machine-readable instructions and/or the example operations 700 end.

FIG. 8 is a flowchart representative of example machine readable instructions and/or example operations 715 that may be executed, instantiated, and/or performed by programmable circuitry to implement the frame synthesis circuitry 310 to perform the processing at block 715 of FIG. 7. The example machine-readable instructions and/or the example operations 715 of FIG. 8 begin at block 805, at which the baseline synthesis circuitry 405 of the frame synthesis circuitry 310 repeatedly generates baseline synthetic frames based on a baseline synthesis model and available prior video frames, as described above. If rendering of a future video frame is predicted to be unsynchronized (block 810), then at block 815 the synthesis refinement circuitry 410 of the frame synthesis circuitry 310 generates a refined synthetic frame based on a synthesis refinement model, a selected one of the baseline synthetic frames, and an audio transcript, as described above. At block 820, the synthesis refinement circuitry 410 outputs the refined synthetic frame to the media rendering circuitry 210. If rendering is to continue (block 825), processing returns to block 805 and blocks subsequent thereto. Otherwise, the example machine-readable instructions and/or the example operations 715 end.

FIG. 9 is a flowchart representative of example machine readable instructions and/or example operations 725 that may be executed, instantiated, and/or performed by programmable circuitry to implement the prediction decision circuitry 305 to perform the processing at block 725 of FIG. 7. The example machine-readable instructions and/or the example operations 725 of FIG. 9 begin at block 905, at which the prediction decision circuitry 305 determine whether a future video frame to be replaced with a synthetic frame is a reference video frame or a predicted video frame, as described above. If the future video frame is a predicted video frame (block 910), then at block 915 the prediction decision circuitry 305 sets the skip control signal 270 to cause the video decoder circuitry 225 to skip decoding of the future video frame, as described above. However, if the future video frame is not a predicted video frame and, thus, is a reference video frame (block 910), then at block 920 the prediction decision circuitry 305 sets the skip control signal 270 to cause the video decoder circuitry 225 to decode the future video frame, as described above. Tthe example machine-readable instructions and/or the example operations 725 then end.

FIG. 10 is a block diagram of an example programmable circuitry platform 1000 structured to execute and/or instantiate the example machine-readable instructions and/or the example operations of FIGS. 7-9 to implement the predictive video processor 200 of FIGS. 2-6. The programmable circuitry platform 1000 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing and/or electronic device.

The programmable circuitry platform 1000 of the illustrated example includes programmable circuitry 1012. The programmable circuitry 1012 of the illustrated example is hardware. For example, the programmable circuitry 1012 can be implemented by one or more integrated circuits, logic circuits, FPGAs, microprocessors, CPUs, GPUs, DSPs, and/or microcontrollers from any desired family or manufacturer. The programmable circuitry 1012 may be implemented by one or more semiconductor based (e.g., silicon based) devices. In this example, the programmable circuitry 1012 implements the predictive video processor 200 and, more specifically, one or more of the example media decoder circuitry 205, the media rendering circuitry 210, the video prediction circuitry 215, the audio decoder circuitry 220, the video decoder circuitry 225, the audio rendering circuitry 245, the video rendering circuitry 250, the prediction decision circuitry 305, the frame synthesis circuitry 310, the baseline synthesis circuitry 405, and/or the synthesis refinement circuitry 410.

The programmable circuitry 1012 of the illustrated example includes a local memory 1013 (e.g., a cache, registers, etc.). The programmable circuitry 1012 of the illustrated example is in communication with main memory 1014, 1016, which includes a volatile memory 1014 and a non-volatile memory 1016, by a bus 1018. The volatile memory 1014 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 1016 may be implemented by flash memory and/or any other desired type of memory device. Access to the main memory 1014, 1016 of the illustrated example is controlled by a memory controller 1017. In some examples, the memory controller 1017 may be implemented by one or more integrated circuits, logic circuits, microcontrollers from any desired family or manufacturer, or any other type of circuitry to manage the flow of data going to and from the main memory 1014, 1016.

The programmable circuitry platform 1000 of the illustrated example also includes interface circuitry 1020. The interface circuitry 1020 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 1022 are connected to the interface circuitry 1020. The input device(s) 1022 permit(s) a user (e.g., a human user, a machine user, etc.) to enter data and/or commands into the programmable circuitry 1012. The input device(s) 1022 can be implemented by, for example, an audio sensor, a microphone, a camera (still or video), a keyboard, a button, a mouse, a touchscreen, a trackpad, a trackball, an isopoint device, and/or a voice recognition system.

One or more output devices 1024 are also connected to the interface circuitry 1020 of the illustrated example. The output device(s) 1024 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 1020 of the illustrated example, thus, typically includes a graphics driver card, a graphics driver chip, and/or graphics processor circuitry such as a GPU.

The interface circuitry 1020 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1026. The communication can be by, for example, an Ethernet connection, a digital subscriber line (DSL) connection, a telephone line connection, a coaxial cable system, a satellite system, a beyond-line-of- sight wireless system, a line-of-sight wireless system, a cellular telephone system, an optical connection, etc.

The programmable circuitry platform 1000 of the illustrated example also includes one or more mass storage discs or devices 1028 to store firmware, software, and/or data. Examples of such mass storage discs or devices 1028 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 1032, which may be implemented by the machine readable instructions of FIGS. 7-9, may be stored in the mass storage device 1028, in the volatile memory 1014, in the non-volatile memory 1016, and/or on at least one non-transitory computer readable storage medium such as a CD or DVD which may be removable.

FIG. 11 is a block diagram of an example implementation of the programmable circuitry 1012 of FIG. 10. In this example, the programmable circuitry 1012 of FIG. 10 is implemented by a microprocessor 1100. For example, the microprocessor 1100 may be a general-purpose microprocessor (e.g., general-purpose microprocessor circuitry). The microprocessor 1100 executes some or all of the machine-readable instructions of the flowcharts of FIGS. 7-9 to effectively instantiate the circuitry of FIG. 2 as logic circuits to perform operations corresponding to those machine readable instructions. In some such examples, the circuitry of FIGS. 2-6 is instantiated by the hardware circuits of the microprocessor 1100 in combination with the machine-readable instructions. For example, the microprocessor 1100 may be implemented by multi-core hardware circuitry such as a CPU, a DSP, a GPU, an XPU, etc. Although it may include any number of example cores 1102 (e.g., 1 core), the microprocessor 1100 of this example is a multi-core semiconductor device including N cores. The cores 1102 of the microprocessor 1100 may operate independently or may cooperate to execute machine readable instructions. For example, machine code corresponding to a firmware program, an embedded software program, or a software program may be executed by one of the cores 1102 or may be executed by multiple ones of the cores 1102 at the same or different times. In some examples, the machine code corresponding to the firmware program, the embedded software program, or the software program is split into threads and executed in parallel by two or more of the cores 1102. The software program may correspond to a portion or all of the machine readable instructions and/or operations represented by the flowcharts of FIGS. 7-9.

The cores 1102 may communicate by a first example bus 1104. In some examples, the first bus 1104 may be implemented by a communication bus to effectuate communication associated with one(s) of the cores 1102. For example, the first bus 1104 may be implemented by at least one of an Inter-Integrated Circuit (I2C) bus, a Serial Peripheral Interface (SPI) bus, a PCI bus, or a PCIe bus. Additionally or alternatively, the first bus 1104 may be implemented by any other type of computing or electrical bus. The cores 1102 may obtain data, instructions, and/or signals from one or more external devices by example interface circuitry 1106. The cores 1102 may output data, instructions, and/or signals to the one or more external devices by the interface circuitry 1106. Although the cores 1102 of this example include example local memory 1120 (e.g., Level 1 (L1) cache that may be split into an L1 data cache and an L1 instruction cache), the microprocessor 1100 also includes example shared memory 1110 that may be shared by the cores (e.g., Level 2 (L2 cache)) for high-speed access to data and/or instructions. Data and/or instructions may be transferred (e.g., shared) by writing to and/or reading from the shared memory 1110. The local memory 1120 of each of the cores 1102 and the shared memory 1110 may be part of a hierarchy of storage devices including multiple levels of cache memory and the main memory (e.g., the main memory 1014, 1016 of FIG. 10). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1102 may be referred to as a CPU, DSP, GPU, etc., or any other type of hardware circuitry. Each core 1102 includes control unit circuitry 1114, arithmetic and logic (AL) circuitry (sometimes referred to as an ALU) 1116, a plurality of registers 1118, the local memory 1120, and a second example bus 1122. Other structures may be present. For example, each core 1102 may include vector unit circuitry, single instruction multiple data (SIMD) unit circuitry, load/store unit (LSU) circuitry, branch/jump unit circuitry, floating-point unit (FPU) circuitry, etc. The control unit circuitry 1114 includes semiconductor-based circuits structured to control (e.g., coordinate) data movement within the corresponding core 1102. The AL circuitry 1116 includes semiconductor-based circuits structured to perform one or more mathematic and/or logic operations on the data within the corresponding core 1102. The AL circuitry 1116 of some examples performs integer based operations. In other examples, the AL circuitry 1116 also performs floating-point operations. In yet other examples, the AL circuitry 1116 may include first AL circuitry that performs integer-based operations and second AL circuitry that performs floating-point operations. In some examples, the AL circuitry 1116 may be referred to as an Arithmetic Logic Unit (ALU).

The registers 1118 are semiconductor-based structures to store data and/or instructions such as results of one or more of the operations performed by the AL circuitry 1116 of the corresponding core 1102. For example, the registers 1118 may include vector register(s), SIMD register(s), general-purpose register(s), flag register(s), segment register(s), machine-specific register(s), instruction pointer register(s), control register(s), debug register(s), memory management register(s), machine check register(s), etc. The registers 1118 may be arranged in a bank as shown in FIG. 11. Alternatively, the registers 1118 may be organized in any other arrangement, format, or structure, such as by being distributed throughout the core 1102 to shorten access time. The second bus 1122 may be implemented by at least one of an I2C bus, a SPI bus, a PCI bus, or a PCIe bus.

Each core 1102 and/or, more generally, the microprocessor 1100 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1100 is a semiconductor device fabricated to include many transistors interconnected to implement the structures described above in one or more integrated circuits (ICs) contained in one or more packages.

The microprocessor 1100 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 1100, in the same chip package as the microprocessor 1100 and/or in one or more separate packages from the microprocessor 1100.

FIG. 12 is a block diagram of another example implementation of the programmable circuitry 1012 of FIG. 10. In this example, the programmable circuitry 1012 is implemented by FPGA circuitry 1200. For example, the FPGA circuitry 1200 may be implemented by an FPGA. The FPGA circuitry 1200 can be used, for example, to perform operations that could otherwise be performed by the example microprocessor 1100 of FIG. 11 executing corresponding machine readable instructions. However, once configured, the FPGA circuitry 1200 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 1100 of FIG. 11 described above (which is a general purpose device that may be programmed to execute some or all of the machine readable instructions represented by the flowchart(s) of FIGS. 7-9 but whose interconnections and logic circuitry are fixed once fabricated), the FPGA circuitry 1200 of the example of FIG. 12 includes interconnections and logic circuitry that may be configured, structured, programmed, and/or interconnected in different ways after fabrication to instantiate, for example, some or all of the operations/functions corresponding to the machine readable instructions represented by the flowchart(s) of FIGS. 7-9. In particular, the FPGA circuitry 1200 may be thought of as an array of logic gates, interconnections, and switches. The switches can be programmed to change how the logic gates are interconnected by the interconnections, effectively forming one or more dedicated logic circuits (unless and until the FPGA circuitry 1200 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 7-9. As such, the FPGA circuitry 1200 may be configured and/or structured to effectively instantiate some or all of the operations/functions corresponding to the machine readable instructions of the flowchart(s) of FIGS. 7-9 as dedicated logic circuits to perform the operations/functions corresponding to those software instructions in a dedicated manner analogous to an ASIC. Therefore, the FPGA circuitry 1200 may perform the operations/functions corresponding to the some or all of the machine readable instructions of FIGS. 7-9 faster than the general-purpose microprocessor can execute the same.

In the example of FIG. 12, the FPGA circuitry 1200 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1200 of FIG. 12 may access and/or load the binary file to cause the FPGA circuitry 1200 of FIG. 12 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1200 of FIG. 12 to cause configuration and/or structuring of the FPGA circuitry 1200 of FIG. 12, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 1200 of FIG. 12 may access and/or load the binary file to cause the FPGA circuitry 1200 of FIG. 12 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1200 of FIG. 12 to cause configuration and/or structuring of the FPGA circuitry 1200 of FIG. 12, or portion(s) thereof.

The FPGA circuitry 1200 of FIG. 12, includes example input/output (I/O) circuitry 1202 to obtain and/or output data to/from example configuration circuitry 1204 and/or external hardware 1206. For example, the configuration circuitry 1204 may be implemented by interface circuitry that may obtain a binary file, which may be implemented by a bit stream, data, and/or machine-readable instructions, to configure the FPGA circuitry 1200, or portion(s) thereof. In some such examples, the configuration circuitry 1204 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 1206 may be implemented by external hardware circuitry. For example, the external hardware 1206 may be implemented by the microprocessor 1100 of FIG. 11.

The FPGA circuitry 1200 also includes an array of example logic gate circuitry 1208, a plurality of example configurable interconnections 1210, and example storage circuitry 1212. The logic gate circuitry 1208 and the configurable interconnections 1210 are configurable to instantiate one or more operations/functions that may correspond to at least some of the machine readable instructions of FIGS. 7-9 and/or other desired operations. The logic gate circuitry 1208 shown in FIG. 12 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1208 to enable configuration of the electrical structures and/or the logic gates to form circuits to perform desired operations/functions. The logic gate circuitry 1208 may include other electrical structures such as look-up tables (LUTs), registers (e.g., flip-flops or latches), multiplexers, etc.

The configurable interconnections 1210 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1208 to program desired logic circuits.

The storage circuitry 1212 of the illustrated example is structured to store result(s) of the one or more of the operations performed by corresponding logic gates. The storage circuitry 1212 may be implemented by registers or the like. In the illustrated example, the storage circuitry 1212 is distributed amongst the logic gate circuitry 1208 to facilitate access and increase execution speed.

The example FPGA circuitry 1200 of FIG. 12 also includes example dedicated operations circuitry 1214. In this example, the dedicated operations circuitry 1214 includes special purpose circuitry 1216 that may be invoked to implement commonly used functions to avoid the need to program those functions in the field. Examples of such special purpose circuitry 1216 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1200 may also include example general purpose programmable circuitry 1218 such as an example CPU 1220 and/or an example DSP 1222. Other general purpose programmable circuitry 1218 may additionally or alternatively be present such as a GPU, an XPU, etc., that can be programmed to perform other operations.

Although FIGS. 11 and 12 illustrate two example implementations of the programmable circuitry 1012 of FIG. 10, many other approaches are contemplated. For example, FPGA circuitry may include an on-board CPU, such as one or more of the example CPU 1220 of FIG. 11. Therefore, the programmable circuitry 1012 of FIG. 10 may additionally be implemented by combining at least the example microprocessor 1100 of FIG. 11 and the example FPGA circuitry 1200 of FIG. 12. In some such hybrid examples, one or more cores 1102 of FIG. 11 may execute a first portion of the machine readable instructions represented by the flowchart(s) of FIGS. 7-9 to perform first operation(s)/function(s), the FPGA circuitry 1200 of FIG. 12 may be configured and/or structured to perform second operation(s)/function(s) corresponding to a second portion of the machine readable instructions represented by the flowcharts of FIG. 7-9, and/or an ASIC may be configured and/or structured to perform third operation(s)/function(s) corresponding to a third portion of the machine readable instructions represented by the flowcharts of FIGS. 7-9.

It should be understood that some or all of the circuitry of FIGS. 2-6 may, thus, be instantiated at the same or different times. For example, same and/or different portion(s) of the microprocessor 1100 of FIG. 11 may be programmed to execute portion(s) of machine-readable instructions at the same and/or different times. In some examples, same and/or different portion(s) of the FPGA circuitry 1200 of FIG. 12 may be configured and/or structured to perform operations/functions corresponding to portion(s) of machine-readable instructions at the same and/or different times.

In some examples, some or all of the circuitry of FIGS. 2-6 may be instantiated, for example, in one or more threads executing concurrently and/or in series. For example, the microprocessor 1100 of FIG. 11 may execute machine readable instructions in one or more threads executing concurrently and/or in series. In some examples, the FPGA circuitry 1200 of FIG. 12 may be configured and/or structured to carry out operations/functions concurrently and/or in series. Moreover, in some examples, some or all of the circuitry of FIGS. 2-6 may be implemented within one or more virtual machines and/or containers executing on the microprocessor 1100 of FIG. 11.

In some examples, the programmable circuitry 1012 of FIG. 10 may be in one or more packages. For example, the microprocessor 1100 of FIG. 11 and/or the FPGA circuitry 1200 of FIG. 12 may be in one or more packages. In some examples, an XPU may be implemented by the programmable circuitry 1012 of FIG. 10, which may be in one or more packages. For example, the XPU may include a CPU (e.g., the microprocessor 1100 of FIG. 11, the CPU 1220 of FIG. 12, etc.) in one package, a DSP (e.g., the DSP 1222 of FIG. 12) in another package, a GPU in yet another package, and an FPGA (e.g., the FPGA circuitry 1200 of FIG. 12) in still yet another package.

A block diagram illustrating an example software distribution platform 1305 to distribute software such as the example machine readable instructions 1032 of FIG. 10 to other hardware devices (e.g., hardware devices owned and/or operated by third parties from the owner and/or operator of the software distribution platform) is illustrated in FIG. 13. The example software distribution platform 1305 may be implemented by any computer server, data facility, cloud service, etc., capable of storing and transmitting software to other computing devices. The third parties may be customers of the entity owning and/or operating the software distribution platform 1305. For example, the entity that owns and/or operates the software distribution platform 1305 may be a developer, a seller, and/or a licensor of software such as the example machine readable instructions 1032 of FIG. 10. The third parties may be consumers, users, retailers, OEMs, etc., who purchase and/or license the software for use and/or re-sale and/or sub-licensing. In the illustrated example, the software distribution platform 1305 includes one or more servers and one or more storage devices. The storage devices store the machine readable instructions 1032, which may correspond to the example machine readable instructions of FIGS. 7-9, as described above. The one or more servers of the example software distribution platform 1305 are in communication with an example network 1310, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 1032 from the software distribution platform 1305. For example, the software, which may correspond to the example machine readable instructions of FIG. 7-9, may be downloaded to the example programmable circuitry platform 1000, which is to execute the machine readable instructions 1032 to implement the predictive video processor 200. In some examples, one or more servers of the software distribution platform 1305 periodically offer, transmit, and/or force updates to the software (e.g., the example machine readable instructions 1032 of FIG. 10) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

As used herein "substantially real time" refers to occurrence in a near instantaneous manner recognizing there may be real world delays for computing time, transmission, etc. Thus, unless otherwise specified, "substantially real time" refers to real time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and methods have been disclosed that implement predictive video decoding and rendering based on artificial intelligence. Disclosed systems, apparatus, articles of manufacture, and methods improve the efficiency of using a computing device by predicting whether a given video frame to be rendered by the computing device will be unsynchronized (e.g., not synchronized, outside a time alignment tolerance, outside a time alignment window, etc.) with the rendering of corresponding audio data. If so, disclosed systems, apparatus, articles of manufacture, and methods replace the given video frame with a synthetic frame and cause the computing device to render the synthetic frame, instead of the given video frame, with the corresponding audio data. Furthermore, disclosed systems, apparatus, articles of manufacture, and methods cause the computing device to skip decoding of the given video frame, thereby conserving processing resources rather than unnecessarily decoding the given video frame. Disclosed systems, apparatus, articles of manufacture, and methods are accordingly directed to one or more improvement(s) in the operation of a machine such as a computer or other electronic and/or mechanical device.

Further examples and combinations thereof include the following. Example 1 includes an apparatus comprising interface circuitry, machine readable instructions, and at least one processor circuit to be programmed by the machine readable instructions to predict that rendering of a video frame of a media stream will be unsynchronized with rendering of corresponding audio data of the media stream, generate a synthetic frame based on a machine learning model to replace the video frame, and cause the synthetic frame to be rendered with the corresponding audio data.

Example 2 includes the apparatus of example 1, wherein one or more of the at least one processor circuit is to predict that the rendering of the video frame will be unsynchronized with the rendering of the corresponding audio data based on comparison of an offset threshold with a difference between an expected rendering time of the video frame and a rendering timestamp associated with the corresponding audio data.

Example 3 includes the apparatus of example 1 or example 2, wherein one or more of the at least one processor circuit is to predict that the rendering of the video frame will be unsynchronized with the rendering of the corresponding audio data based on a determination that the video frame is unavailable.

Example 4 includes the apparatus of any one of examples 1-3, wherein one or more of the at least one processor circuit is to predict that the rendering of the video frame will be unsynchronized with the rendering of the corresponding audio data based on a comparison of a buffer of one or more decoded video frames with a buffer of one or more decoded audio frames, the one or more decoded video frames obtained from the media stream, the one or more decoded audio frames obtained from the media stream.

Example 5 includes the apparatus of any one of examples 1-4, wherein the machine learning model is based on a generative artificial intelligence model trained to generate the synthetic frame in substantially real time based on a prior video frame decoded from the media stream.

Example 6 includes the apparatus of any one of examples 1-5, wherein the machine learning model is based on a generative artificial intelligence model, the generative artificial intelligence model to generate the synthetic frame based on one or more prior video frames decoded from the media stream and an audio transcript based on the media stream.

Example 7 includes the apparatus of any one of examples 1-6, wherein the synthetic frame is a refined synthetic frame, and the generative artificial intelligence model includes a baseline synthesis model to generate a baseline synthetic frame based on the one or more prior video frames before the prediction that the rendering of the video frame will be unsynchronized with the rendering of the audio data, and a synthesis refinement model to refine a portion of the baseline synthetic frame based on the audio transcript to generate the refined synthetic frame after the prediction that the rendering of the video frame will be unsynchronized with the rendering of the audio data.

Example 8 includes the apparatus of any one of examples 1-7, wherein the at least one processor circuit is to cause decoding of the video frame to be skipped after the prediction that the rendering of the video frame will be unsynchronized with the rendering of the corresponding audio data.

Example 9 includes at least one non-transitory computer readable storage medium comprising instructions to cause at least one processor circuit to at least generate a synthetic frame based on a machine learning model after a determination that rendering of a video frame of a media stream will be delayed by at least a threshold offset relative to corresponding audio data of the media stream, and cause the synthetic frame to replace the delayed video frame.

Example 10 includes the least one non-transitory computer readable storage medium of example 9, wherein the instructions are to cause one or more of the at least one processor circuit to determine that the rendering of the video frame will be delayed based on a comparison of a buffer of one or more decoded video frames with a buffer of one or more decoded audio frames, the one or more decoded video frames obtained from the media stream, the one or more decoded audio frames obtained from the media stream.

Example 11 includes the least one non-transitory computer readable storage medium of example 9 or example 10, wherein the instructions are to cause one or more of the at least one processor circuit to determine that the rendering of the video frame will be delayed based on at least one of a rendering timestamp associated with the corresponding audio data or a determination that the video frame is unavailable.

Example 12 includes the least one non-transitory computer readable storage medium of any one of examples 9-11, wherein the machine learning model is based on a generative artificial intelligence model, the generative artificial intelligence model to generate the synthetic frame based on prior video frames decoded from the media stream and an audio transcript based on the media stream.

Example 13 includes the least one non-transitory computer readable storage medium of any one of examples 9-12, wherein the synthetic frame is a refined synthetic frame, the generative artificial intelligence model includes a baseline synthesis model and a synthesis refinement model, and the instructions are to cause one or more of the at least one processor circuit to repeatedly generate baseline synthetic frames based on the baseline synthesis model and the prior video frames before the determination that the rendering of the video frame will be delayed, and generate the refined synthetic frame based on the synthesis refinement model, one of the baseline synthetic frames and the audio transcript after the determination that the rendering of the video frame will be delayed.

Example 14 includes the least one non-transitory computer readable storage medium of any one of examples 9-13, wherein the instructions are to cause one or more of the at least one processor circuit to determine whether the video frame is a reference video frame or a predicted video frame, and cause decoding of the video frame to be skipped based on a determination that the video frame is a predicted video frame.

Example 15 includes a method comprising generating, by at least one processor circuit programmed by at least one instruction, a synthetic frame to replace a video frame of a media stream after a determination that the video frame and corresponding audio data of the media stream will not be rendered within a synchronization tolerance, the synthetic frame based on a generative artificial intelligence model, and replacing the delayed video frame with the synthetic frame.

Example 16 includes the method of example 15, further including determining that the video frame and corresponding audio data of the media stream will not be rendered within the synchronization tolerance based on comparison of an offset threshold with a difference between an expected rendering time of the video frame and a rendering timestamp associated with the corresponding audio data.

Example 17 includes the method of example 15 or example 16, wherein further including determining that the video frame and corresponding audio data of the media stream will not be rendered within the synchronization tolerance based on comparison of a buffer of one or more decoded video frames with a buffer of one or more decoded audio frames, the one or more decoded video frames obtained from the media stream, the one or more decoded audio frames obtained from the media stream.

Example 18 includes the method of any one of examples 15-17, wherein the synthetic frame is a refined synthetic frame, the generative artificial intelligence model includes a baseline synthesis model and a synthesis refinement model, and further including repeatedly generating baseline synthetic frames based on the baseline synthesis model and prior video frames of the media stream before the determination that the rendering of the video frame will be delayed, and generating the refined synthetic frame based on the synthesis refinement model, one of the baseline synthetic frames and an audio transcript associated with the media stream after the determination that the rendering of the video frame will be delayed.

Example 19 includes the method of any one of examples 15-18, further including determining whether the video frame is a reference video frame or a predicted video frame, and skipping decoding of the video frame based on a determination that the video frame is a predicted video frame.

Example 20 includes the method of any one of examples 15-19, further including decoding the video frame based on a determination that the video frame is a reference video frame.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An apparatus comprising:
interface circuitry;
machine readable instructions; and
at least one processor circuit to be programmed by the machine readable instructions to:
predict that rendering of a video frame of a media stream will be unsynchronized with rendering of corresponding audio data of the media stream;
generate a synthetic frame based on a machine learning model to replace the video frame; and
cause the synthetic frame to be rendered with the corresponding audio data.

2. The apparatus of claim 1, wherein one or more of the at least one processor circuit is to predict that the rendering of the video frame will be unsynchronized with the rendering of the corresponding audio data based on comparison of an offset threshold with a difference between an expected rendering time of the video frame and a rendering timestamp associated with the corresponding audio data.

3. The apparatus of claim 1, wherein one or more of the at least one processor circuit is to predict that the rendering of the video frame will be unsynchronized with the rendering of the corresponding audio data based on a determination that the video frame is unavailable.

4. The apparatus of claim 1, wherein one or more of the at least one processor circuit is to predict that the rendering of the video frame will be unsynchronized with the rendering of the corresponding audio data based on a comparison of a buffer of one or more decoded video frames with a buffer of one or more decoded audio frames, the one or more decoded video frames obtained from the media stream, the one or more decoded audio frames obtained from the media stream.

5. The apparatus of any one of claims 1 to 4, wherein the machine learning model is based on a generative artificial intelligence model trained to generate the synthetic frame in substantially real time based on a prior video frame decoded from the media stream.

6. The apparatus of any one of claims 1 to 4, wherein the machine learning model is based on a generative artificial intelligence model, the generative artificial intelligence model to generate the synthetic frame based on one or more prior video frames decoded from the media stream and an audio transcript based on the media stream.

7. The apparatus of claim 6, wherein the synthetic frame is a refined synthetic frame, and the generative artificial intelligence model includes:
a baseline synthesis model to generate a baseline synthetic frame based on the one or more prior video frames before the prediction that the rendering of the video frame will be unsynchronized with the rendering of the audio data; and
a synthesis refinement model to refine a portion of the baseline synthetic frame based on the audio transcript to generate the refined synthetic frame after the prediction that the rendering of the video frame will be unsynchronized with the rendering of the audio data.

8. The apparatus of any one of claims 1 to 7, wherein the at least one processor circuit is to cause decoding of the video frame to be skipped after the prediction that the rendering of the video frame will be unsynchronized with the rendering of the corresponding audio data.

9. A method comprising:
generating a synthetic frame to replace a video frame of a media stream after a determination that the video frame and corresponding audio data of the media stream will not be rendered within a synchronization tolerance, the synthetic frame based on a generative artificial intelligence model; and
replacing the video frame with the synthetic frame.

10. The method of claim 9, further including determining that the video frame and corresponding audio data of the media stream will not be rendered within the synchronization tolerance based on comparison of an offset threshold with a difference between an expected rendering time of the video frame and a rendering timestamp associated with the corresponding audio data.

11. The method of claim 9, wherein further including determining that the video frame and corresponding audio data of the media stream will not be rendered within the synchronization tolerance based on comparison of a buffer of one or more decoded video frames with a buffer of one or more decoded audio frames, the one or more decoded video frames obtained from the media stream, the one or more decoded audio frames obtained from the media stream.

12. The method of any one of claims 9 to 11, wherein the synthetic frame is a refined synthetic frame, the generative artificial intelligence model includes a baseline synthesis model and a synthesis refinement model, and further including:
repeatedly generating baseline synthetic frames based on the baseline synthesis model and
prior video frames of the media stream before the determination that the video frame and
corresponding audio data of the media stream will not be rendered within the synchronization tolerance; and
generating the refined synthetic frame based on the synthesis refinement model, one of the baseline synthetic frames and an audio transcript associated with the media stream after the determination that the video frame and corresponding audio data of the media stream will not be rendered within the synchronization tolerance.

13. The method of any one of claims 9 to 12, further including:
determining whether the video frame is a reference video frame or a predicted video frame; and
skipping decoding of the video frame based on a determination that the video frame is a predicted video frame.

14. The method of claim 14, further including decoding the video frame based on a determination that the video frame is a reference video frame.

15. At least one computer readable storage medium comprising instructions to cause at least one processor circuit to perform the method of any one of claims 9 to 14.
